# EUROPEAN PATENT APPLICATION

(11) **EP 4 807 140 A2**
(43) Date of publication of application: **16.09.2026**
(21) Application number: 26161013.3
(22) Date of filing: 26.02.2026
(51) Int. Cl.: F01D 5/20

(54) **TURBINE BLADE AND GAS TURBINE**

(30) Priority: 11.03.2025 KR 20250031064
(71) Applicant: Doosan Enerbility Co., Ltd., Seongsan-gu Changwon-si, Gyeongsangnam-do 51711 (KR)
(72) Inventor: Kim, Ki Baek, Yongin-si, Gyeonggi-do (KR); An, Yun Ho, Sejong-si (KR); Kim, Jeong Ju, Seongnam-si, Gyeonggi-do (KR)
(74) Representative: BCKIP Part mbB

(57) **Abstract**

A turbine blade (1000) includes a blade body (1100) and a squealer tip (1200). The blade body (1100) includes a leading edge (1110), a trailing edge (1120) spaced apart from the leading edge (1110), a suction sidewall (1130) having an outwardly convex shape and connecting one end of the leading edge (1110) to one end of the trailing edge (1120), a pressure sidewall (1140) having an inwardly concave shape and connecting one end of the leading edge (1110) to one end of the trailing edge (1120), and a tip region (1150) on a top surface. The squealer tip 1200 extends upward from the tip region (1150) of the blade body (1100), and includes a first squealer tip (1210) extending upward from the suction sidewall (1130) and a second squealer tip (1220) extending upward from the pressure sidewall (1140). The first squealer tip (1210) and the second squealer tip (1220) extend to different heights.
A gas turbine (100) includes a compressor (110) configured to compress air introduced from an external source; a plurality of turbine blades (1000) configured to be rotated by combustion gas generated by the combustor (120) to generate power, wherein each of the turbine blades (1000) comprises the turbine blade (1000).

## Description

The present application claims priority to Korean Patent Application No. 10-2025-0031064, filed on March 11, 2025.

### BACKGROUND

### Technical Field

The disclosure relates to a turbine blade and a gas turbine including the same and, more particularly, to a turbine blade and a gas turbine including the same, which generates rotational force using exhaust gas ejected from a combustor.

The disclosure relates to a turbine blade, which includes a squealer tip having a step on a tip region of a blade body, and a gas turbine including the same.

### Description of the Related Art

A turbine is a mechanical device which generates rotational force through impact or reaction using a flow of compressible fluid, such as steam or gas. Examples include steam turbines which use steam and gas turbines which use high-temperature combustion gas.

Among these, gas turbines are primarily composed of a compressor, a combustor, and a turbine. The compressor is provided with an air inlet for introducing air, and has a plurality of compressor vanes and a plurality of compressor blades, which are alternately arranged in the compressor casing. Air introduced from an external source is progressively compressed while passing through a plurality of stages of rotating compressor blades, thereby increasing the air pressure to a target level.

The combustor generates high-temperature and high-pressure combustion gas by supplying fuel to the air compressed in the compressor and ignites the fuel using a burner.

The turbine has a plurality of turbine vanes and a plurality of turbine blades alternately arranged in the turbine casing. In addition, a rotor is disposed to extend through the central portion of the compressor, the combustor, the turbine, and the exhaust chamber.

The rotor is rotatably supported at opposite ends by bearings. A plurality of disks are fixed to the rotor to connect the respective blades and connect a drive shaft of a generator or the like to one end on the exhaust chamber side.

Because these gas turbines lack reciprocating mechanisms such as pistons in four-stroke engines, there are no friction points such as piston-cylinder interfaces. Consequently, there are advantages that lubricant consumption is extremely low, vibration amplitude characteristic of reciprocating machinery is significantly reduced, and high-speed operation is achievable.

Briefly describing the gas turbine operation, combustion air compressed by the compressor is mixed with fuel and combusted, thereby producing high-temperature combustion gas. The combustion gas is then ejected toward the turbine. The ejected combustion gas passing through the turbine vanes and turbine blades generates rotational force, thereby rotating the rotor.

Factors affecting gas turbine efficiency are highly diverse. In recent gas turbine development, research is being undertaken in various areas, including improving combustion efficiency in the combustor, enhancing thermodynamic efficiency by increasing turbine inlet temperature, improving aerodynamic efficiency in both the compressor and the turbine, and the like.

Here, one of the most critical aspects addressed in improving aerodynamic efficiency in compressors and turbines is gap control at the compressor blades and turbine blade tips. Conventional gas turbine blade tips are designed to have a squealer tip shape. In rotating turbine blades, losses due to tip leakage flow are unavoidable. However, leakage flow may be reduced depending on the turbine blade tip geometry, thereby enhancing the aerodynamic performance of the turbine. Therefore, research on turbine blade tip geometries, which can improve the aerodynamic performance, is currently underway.

### (Documents of Related Art)

(Patent Document 1) United States Patent No. 7922451 (April 12, 2011)

### SUMMARY

Accordingly, the disclosure has been made keeping in mind the above problems occurring in the related art, and the disclosure is intended to provide a turbine blade and a gas turbine including the same, wherein the turbine blade has an improved squealer tip structure that may reduce tip leakage flow between the blade and a turbine casing, thereby enhancing the aerodynamic performance of the turbine while improving the cooling efficiency of the turbine.

In order to achieve at least one of the above objectives, according to one aspect of the disclosure, there is provided a turbine blade including: a blade body including a leading edge, a trailing edge spaced apart from the leading edge, a suction sidewall having an outwardly convex shape and connecting one end of the leading edge to one end of the trailing edge, a pressure sidewall having an inwardly concave shape and connecting one end of the leading edge to one end of the trailing edge, and a tip region on a top surface; and a squealer tip extending upward from a top region of the blade body, wherein the squealer tip includes a first squealer tip extending upward from the suction sidewall and a second squealer tip extending upward from the pressure sidewall, the first squealer tip and the second squealer tip extending to different heights.

In the turbine blade according to the disclosure, the height of the first squealer tip extending from the tip region of the blade body may be greater than the height of the second squealer tip extending from the tip region of the blade body.

The squealer tip may further include a third squealer tip provided between the first squealer tip and the second squealer tip on the tip region of the blade body, extending upward, and sloping toward the second squealer tip. The height of the third squealer tip extending from the tip region of the blade body may be equal to the height of the first squealer tip extending from the tip region of the blade body.

The angle of the third squealer tip sloping toward the second squealer tip from the tip region of the blade body may be between 30° and 90°.

The thickness of each of the first squealer tip, the second squealer tip, and the third squealer tip may be between 1 mm and 3 mm.

The separation width between one surface of a bottom of the third squealer tip adjacent to the second squealer tip and one surface of the adjacent second squealer tip may be between 1 mm and 5 mm.

The ratio of the height of the second squealer tip extending from the tip region of the blade body relative to the thickness of the tip region of the blade body may be between 0.01 and 0.05.

The ratio of the height of the first squealer tip extending from the tip region of the blade body relative to the thickness of the tip region of the blade body may be between 0.01 and 0.1.

Also provided is a gas turbine including: a compressor configured to compress air introduced from an external source; a plurality of turbine blades configured to be rotated by combustion gas generated by the combustor to generate power, wherein each of the turbine blades includes: a blade body including a leading edge, a trailing edge spaced apart from the leading edge, a suction sidewall having an outwardly convex shape and connecting one end of the leading edge to one end of the trailing edge, a pressure sidewall having an inwardly concave shape and connecting one end of the leading edge to one end of the trailing edge, and a tip region on a top surface; and a squealer tip extending upward from a top region of the blade body, wherein the squealer tip includes a first squealer tip extending upward from the suction sidewall and a second squealer tip extending upward from the pressure sidewall, the first squealer tip and the second squealer tip extending to different heights.

In the turbine blade and the gas turbine including the same according to the disclosure, by designing the squealer tip extending upward from the tip region of the blade body to have a stepped and inclined shape, the tip leakage flow escaping between the squealer tip and the turbine casing may be reduced, thereby improving the aerodynamics of the turbine.

Furthermore, the stepped and inclined shape of the squealer tip of the turbine blade may reduce mixing with the main flow, thereby improving cooling performance on the pressure sidewall. This enhanced cooling performance may reduce the cooling flow rate.

### BRIEF DESCRIPTION OF THE DRAWINGS

The above and other objectives, features, and other advantages of the disclosure will be more clearly understood from the following detailed description when taken in conjunction with the accompanying drawings, in which:
FIG. 1 is a partially cutaway perspective view illustrating a gas turbine according to embodiments of the disclosure;
FIG. 2 is a cross-sectional view schematically illustrating the structure of the gas turbine shown in FIG. 1;
FIG. 3 is an exploded perspective view illustrating the rotor disc shown in FIG. 2;
FIG. 4 is an enlarged view illustrating a squealer tip according to a first embodiment, which is upwardly extended on a tip region of the turbine blade shown in FIG. 3;
FIG. 5 is a schematic view illustrating a turbine blade including a squealer tip according to a second embodiment;
FIG. 6 is an enlarged view illustrating important portions of the turbine blade shown in FIG. 5;
FIG. 7 is an enlarged view illustrating a squealer tip according to the second embodiment, which is upwardly extended on a tip region of the turbine blade; and
FIG. 8 is an enlarged view illustrating a squealer tip according to a third embodiment, which is upwardly extended on a tip region of the turbine blade.

### DETAILED DESCRIPTION

Hereinafter, the disclosure will be described in detail with reference to the accompanying drawings. Terms and words used in this specification and the claims should not be interpreted as being limited merely to common and dictionary meanings, and should be interpreted in accordance with the meaning and concepts consistent with the technical concept of the disclosure, based on the principle that inventors may appropriately define the concepts of terms to describe their own inventions in the best possible manner.

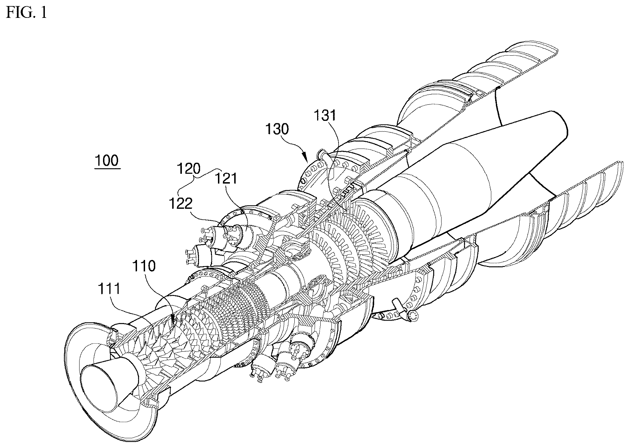

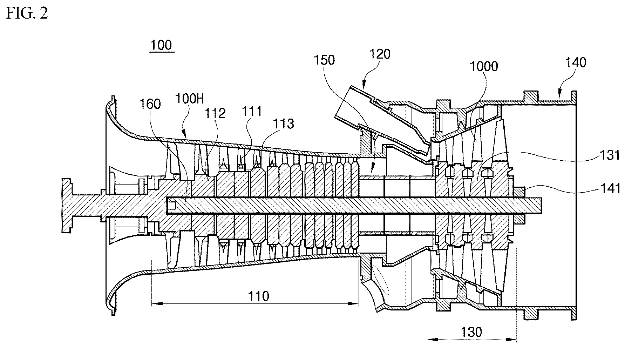

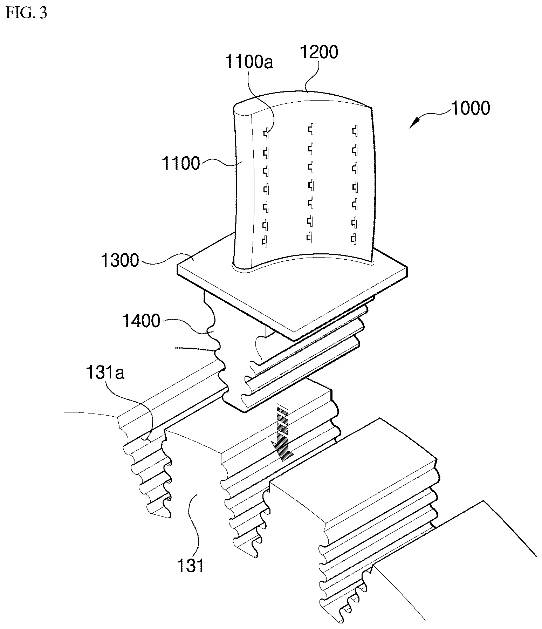

FIG. 1 is a partially cutaway perspective view illustrating a gas turbine according to embodiments of the disclosure, FIG. 2 is a cross-sectional view schematically illustrating the structure of the gas turbine shown in FIG. 1, and FIG. 3 is an exploded perspective view illustrating the rotor disk shown in FIG. 2.

Referring to FIG. 1, a gas turbine 100 according to embodiments of the disclosure includes a compressor 110, a combustor 120, and a turbine 130. The compressor 110 includes a plurality of blades 111 which are radially arranged. The compressor 110 rotates the blades 111, and air is compressed and moved by the rotation of the blades 111. The size and arrangement angle of the blades 111 may vary depending on the arrangement position. The compressor 110 may be connected directly or indirectly to the turbine 130 to receive a portion of power generated by the turbine 130 to use for rotating the blades 111.

Air compressed by the compressor 110 moves to the combustor 120. The combustor 120 includes a plurality of combustion chambers 121 arranged in an annular configuration, as well as a fuel nozzle module 122.

Referring to FIGS. 2 and 3, the gas turbine 100 according to an embodiment of the disclosure includes a housing 100H. A diffuser 140 is provided at the rear side of the housing 100H, through which combustion gas which has passed through the turbine 130 is discharged, and the combustor 120, which receives and combusts compressed air supplied, is disposed in front of the diffuser 140.

Describing based on the direction of flow of air, the compressor 110 section is positioned upstream of the housing 100H, and the turbine 130 section is positioned downstream. In addition, a torque tube unit 150 is disposed between the compressor 110 section and the turbine 130 section. The torque tube unit 150 functions as a torque transmission member to transfer the rotational torque generated in the turbine 130 section to the compressor 110 section.

The compressor section 110 is provided with a plurality of (e.g., 14) compressor rotor disks 112, each of which is fastened by a tie rod 160 to prevent axial separation.

Specifically, the respective compressor rotor disks 112 are aligned in the axial direction with the tie rod 160 forming the rotational shape extending approximately through the centers. Here, the respective compressor rotor disks 112 are arranged such that the opposing surfaces thereof are pressed together by the tie rod 160 to prevent relative rotation.

The plurality of blades 111 are radially coupled to the outer peripheral surfaces of the compressor rotor disks 112. Each of the blades 111 has a dovetail portion 113 by which the blade 111 is fastened to the compressor rotor disk 112.

Vanes (not shown) are provided between the rotor disks 112, and are fixedly disposed in the housing 100H. Unlike the rotor disks, the vanes are fixed so as not to rotate. The vanes serve to align flow of compressed air that has passed through the blades of the compressor rotor disks, thereby guiding the air to the blades of the downstream rotor disks.

The dovetail portion 113 may be fastened to the compressor rotor disk 112 by a tangential type or an axial type. The fastening structure may be selected depending on the required structure of a commercial gas turbine, and may be a conventionally known dovetail or fir tree structure. In some cases, the blades may be fastened to the rotor disks using different fastening devices to those described above, such as keys or bolts.

The tie rod 160 is disposed to extend through the central portions of the plurality of compressor rotor disks 112 and the turbine rotor disks 131. The tie rod 160 may be implemented as one or a plurality of tie rods. One end of the tie rod 160 is fastened within the uppermost compressor rotor disk, and the other end of the tie rod 160 is fastened by a fixed nut 141.

The configuration of the tie rod 160 may vary depending on the gas turbine design, and is not necessarily limited to the configuration shown in FIG. 2. For example, a single tie rod may extend through the central portions of the rotor disks as shown in the figures, a plurality of tie rods may be arranged circumferentially, or a combination of these configurations may be used.

Although not shown, a vane acting as a guide fin may be disposed at the position next to the diffuser 140 in the compressor of a gas turbine to align the flow angle of fluid entering the combustor inlet with the design flow angle after the fluid pressure is increased. This is referred to as the deswirler.

In the combustor 120, incoming compressed air is mixed with fuel and combusted to produce high-energy, high-temperature, high-pressure combustion gas. In this isothermal combustion process, the temperature of the combustion gas is increased to the maximum heat resistance limit that the combustor and turbine components can withstand.

A plurality of combustors, which constitute the combustion system of the gas turbine, may be arranged in the housing having a cell shape. Each of the combustors includes a burner including a fuel nozzle module 122, a combustor liner forming the combustion chamber, and a transition piece connecting the combustor and the turbine.

Specifically, the liner provides a combustion chamber 121 which serves as a combustion space, in which fuel injected by the fuel nozzle module 122 is mixed with compressed air from the compressor before being combusted. This liner may include a combustion chamber which forms a combustion space in which fuel mixed with air is burned and a flow sleeve which surrounds the combustion chamber and forms an annular space. The fuel nozzle module 122 is coupled to the front end of the liner, and an ignition plug is coupled to the sidewall.

The transition piece is connected to the rear end of the liner to direct combustion gas ignited by the spark plug toward the turbine. The outer wall section of the transition piece is cooled by compressed air which is supplied from the compressor to prevent damage from the high-temperature combustion gas.

In this regard, cooling holes are provided in the transition piece to allow air to be injected internally. The compressed air flows through the cooling holes to cool the main body inside before flowing toward the liner side.

Cooling air flows through the annular space of the liner to cool the transition piece. Compressed air may be supplied from outside the flow sleeve through the cooling holes in the flow sleeve to serve as cooling air and collide with the outer wall of the liner.

The high-temperature and high-pressure combustion gas exiting the combustor is supplied to the turbine 130. The supplied high-temperature and high-pressure combustion gas expands and collides with the rotating blades of the turbine, thereby imparting a reaction force that generates rotational torque. The rotational torque is transmitted to the compressor via the torque tube. Any power exceeding that required to drive the compressor is used to drive the generator or the like.

The structure of the turbine 130 is fundamentally similar to that of the compressor. That is, the turbine 130 also includes a plurality of turbine rotor disks 131 similar to the compressor rotor disks. Therefore, the turbine rotor disks 131 also include a plurality of turbine blades 1000 arranged radially. The turbine blades 1000 may also be coupled to the turbine rotor disks 131 using the dovetail structure or the like. Furthermore, turbine vanes (not shown) are provided between the turbine blades 1000 on the turbine rotor disks 131 and fixed to the housing to guide the flow direction of combustion gas that has passed through the blades.

Referring to FIG. 3, each of the turbine rotor disks 131 has a generally disk-like shape, and a plurality of coupling slots 131a are provided on the outer periphery of the turbine rotor disks. The coupling slots 131a may desirably have a corrugated surface in the shape of a fir tree.

The turbine blades 1000 are fastened in the coupling slots 131a. The turbine blade 1000 has a flat plate-shaped platform portion 1300 approximately on the central portion thereof. The platform portion 1300 has side surfaces in contact with those of the platform portions 1300 of adjacent turbine blades, thereby serving to maintain the gap between the blades.

A root portion 1400 is provided on the bottom surface of the platform portion 1300. The root portion 1400 has an axial-type configuration and is inserted into the corresponding coupling slot 131a of the rotor disk 131 in the axial direction of the rotor disk 131.

The root portion 1400 has a corrugated portion generally in the shape of a fir tree, which conforms to the shape of the corrugated portion of the coupling slot 131a. Here, the coupling structure of the root portion 1400 is not necessarily limited to the fir tree shape and may also have a dovetail structure.

A blade body 1100 is provided on the upper surface of the platform portion 1300. The blade body 1100 is configured to have an airfoil optimized according to the specification of the gas turbine, and includes a leading edge 1110 which is disposed upstream in the flow direction of combustion gas and a trailing edge 1120 which is disposed downstream and spaced apart from the leading edge 1110.

Here, unlike the compressor blades, the turbine blades come into direct contact with high-temperature and high-pressure combustion gas. Because the temperature of the combustion gas reaches as high as 1700°C, cooling measures are required. In this regard, a cooling flow path is provided that draws in compressed air from specific locations in the compressor and directs the drawn compressed air toward the turbine-side blades.

The cooling flow path may extend from outside the housing (i.e., an external flow path), may extend by passing through the interior of the rotor disk (i.e., an internal flow path), or both external and internal flow paths may be used. In FIG. 3, a plurality of film cooling holes 1100a are provided on the surface of the blade body 1100. The film cooling holes 1100a communicate with cooling channels (not shown) provided inside the blade body 1100 to supply cooling air to the surface of the blade body 1100.

The blade body 1100 of the turbine rotates in the housing due to combustion gas. To enable the blade body 1100 to rotate smoothly, a gap is present between the end of the blade body 1100 and the inner surface of the housing. However, because combustion gas may leak through this gap as described above, a sealing means is desired to prevent such leakage.

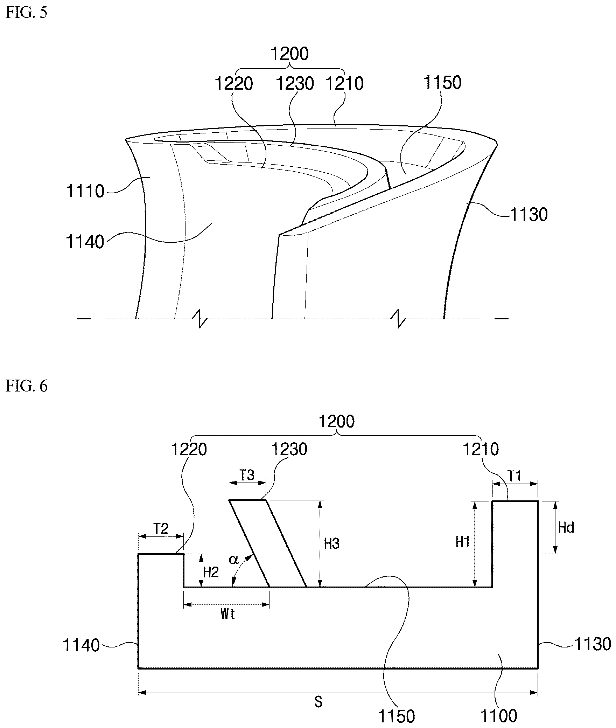

Referring to FIGS. 5 and 6, the blade body 1100 generally includes a leading edge 1110, a trailing edge 1120, a suction sidewall 1130 formed outwardly convex and connecting one end of the leading edge 1110 to one end of the trailing edge 1120, a pressure sidewall 1140 formed inwardly concave and connecting one end of the leading edge 1110 to one end of the trailing edge 1120, and a tip region 1150 on the top surface. The tip region 1150 has a tip gap that allows relative movement with respect to the inner surface of the casing. Due to the pressure difference between an adjacent blade body 1100 and the passage, a strong secondary flow occurs through the tip gap from the pressure sidewall 1140 toward the suction sidewall 1130 of the blade body 1100. This flow is referred to as the tip leakage flow.

The tip leakage flow passes through the tip gap and then moves downstream while spiraling along the suction sidewall. Three-dimensional flow occurring near the tip clearance, such as tip-leakage vortices, significantly increases pressure loss, thereby reducing turbine stage efficiency. The pressure loss caused by this tip leakage flow increases proportionally with the leakage flow rate and is known to account for approximately 30% of the total pressure loss.

To reduce pressure loss caused by tip leakage flow, high-pressure turbine blades currently in use primarily include a squealer tip 1200. The squealer tip 1200 is also referred to as a recessed tip. The squealer tip 1200 extends upward from the tip region 1150, and has a fence-like protrusion on the tip edge as well as a recessed cavity. The turbine blade 1000 having the squealer tip 1200 reduces tip leakage flow compared to a turbine blade having a flat tip.

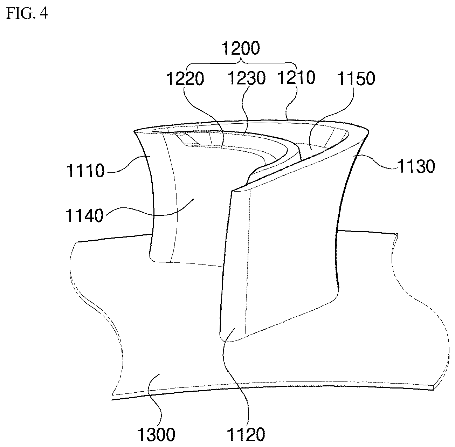

Referring to FIGS. 3 and 4, the squealer tip 1200 includes a first squealer tip 1210 and a second squealer tip 1220. The first squealer tip 1210 extends upward from the suction sidewall 1130, and the second squealer tip 1220 extends upward from the pressure sidewall 1140.

The first squealer tip 1210 and the second squealer tip 1220, which extend upward from the tip region 1150, extend to different heights. It is desirable that the height H1 to which the first squealer tip 1210 extends is greater than the height H2 to which the second squealer tip 1220 extends.

Referring to FIGS. 5 to 7, the squealer tip 1200 may further include a third squealer tip 1230, which is provided between the first squealer tip 1210 and the second squealer tip 1220. The third squealer tip 1230 extends upward from the tip region 1150 and slopes toward the second squealer tip 1220. It is desirable that the height H3 of the third squealer tip 1230 is the same as the height H1 of the first squealer tip 1210.

The stepped configuration of the first squealer tip 1210 and the third squealer tip 1230 and the second squealer tip 1220 and the inclined configuration of the third squealer tip 1230 may reduce mixing with the main flow, thereby improving cooling performance on the pressure sidewall 1140.

The third squealer tip 1230 is configured to slope toward the second squealer tip 1220 from the tip region 1150 of the blade body 1100. The slope angle α is desirably 30° ≤ α ≤ 90°.

In a case where the inclination angle α of the third squarer tip 1230 toward the second squarer tip 1220 is 30° or less, the angle is sharper, thereby resulting in reduced manufacturability. In a case where the inclination angle α of the third squarer tip 1230 is 90° or greater, the effect of reducing tip leakage flow is lost.

The thicknesses T1, T2, and T3 of the first squealer tip 1210, the second squealer tip 1220, and the third squealer tip 1230, which extend upward from the tip region 1150, are desirably between 1 mm and 3 mm.

In a case where the thicknesses T1, T2, and T3 of the first squealer tip 1210, the second squealer tip 1220, and the third squealer tip 1230 are 1 mm or less, casting properties may be poor, thereby causing quality issues during production. In a case where the thicknesses T1, T2, and T3 are 3 mm or more, the area to be cooled may increase, and the effect of reducing tip leakage flow may be lost.

It is desirable that one surface of the bottom of the third squealer tip 1230, adjacent to the second squealer tip 1220, be spaced apart from one surface of the adjacent second squealer tip 1220 by a separation width Wt between 1 mm and 5 mm.

In a case where the separation width Wt between one surface of the bottom of the third squealer tip 1230 and one surface of the second squealer tip 1220 is 1 mm or less, the casting quality may deteriorate, thereby leading to manufacturing quality issues. In a case where the separation width Wt is 5 mm or greater, problems arise with the shape of the blade tip, thereby preventing the third squealer tip 1230 from performing the intended function.

It is desirable that the ratio of the height H2 to which the second squealer tip 1220 extends from the tip region 1150 of the blade body 1100 relative to the thickness of the tip region 1150 of the blade body 1100 is 0.01 ≤ H2/S ≤ 0.05. In a case where the ratio of the height H2 by which the second squealer tip 1220 extends from the tip region 1150 of the blade body 1100 relative to the thickness of the tip region 1150 of the blade body 1100 is 0.01 or less, a problem occurs in manufacturability. In a case where the ratio of the height H2 by which the second squealer tip 1220 extends is 0.05 or greater, the effect on the step may be lost.

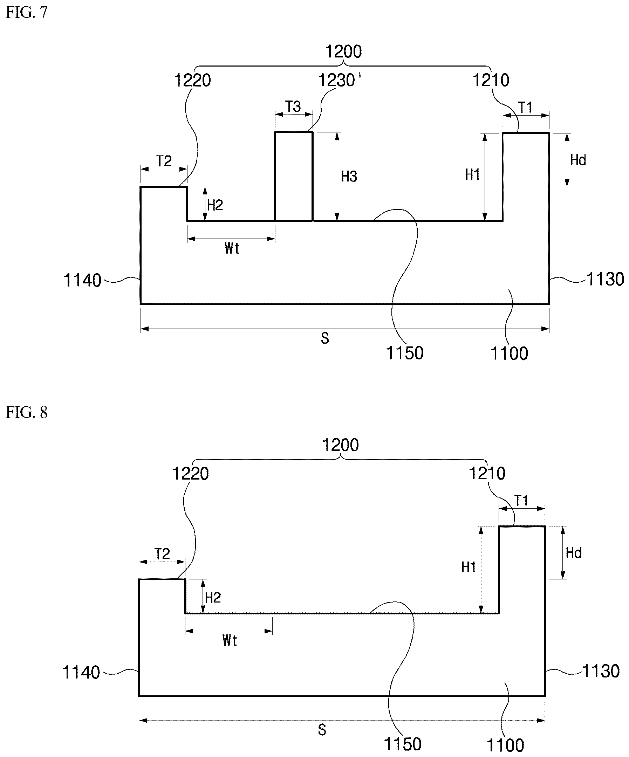

Referring to FIG. 8, the third squealer tip 1230' may extend vertically from the tip region 1150 of the blade body 1100 without being inclined toward the second squealer tip 1220. It is desirable that the height H3 and the thickness T3 of the third squealer tip 1230' be the same as the height H1 and the thickness T3 of the first squealer tip 1210.

Therefore, by designing the squealer tip 1200 extending upward from the tip region 1150 of the blade body 1100 to have a stepped and inclined shape, the tip leakage flow escaping between the squealer tip and the turbine casing may be reduced, thereby improving the aerodynamics of the turbine.

Furthermore, the stepped and inclined shape of the squealer tip 1200 of the turbine blade 1000 may reduce mixing with the main flow, thereby improving cooling performance on the pressure sidewall. This enhanced cooling performance may reduce the cooling flow rate.

The disclosure has been described with reference to the embodiments illustrated in the drawings, but these are merely illustrative, and a person having ordinary skill in the art will understand that various modifications and equivalent other embodiments are possible based thereon. Therefore, the full scope of the technical protection of the disclosure should be determined by the technical concepts set forth in the appended claims.

## Claims

1. A turbine blade (1000) comprising:
a blade body (1100) comprising a leading edge (1110), a trailing edge (1120) spaced apart from the leading edge (1110), a suction sidewall (1130) having an outwardly convex shape and connecting one end of the leading edge (1110) to one end of the trailing edge (1120), a pressure sidewall (1140) having an inwardly concave shape and connecting one end of the leading edge (1110) to one end of the trailing edge (1120), and a tip region (1150) on a top surface; and
a squealer tip (1200) extending upward from a tip region (1150) of the blade body (1100),
wherein the squealer tip (1200) comprises a first squealer tip (1210) extending upward from the suction sidewall (1130) and a second squealer tip (1220) extending upward from the pressure sidewall (1140),
the first squealer tip (1210) and the second squealer tip (1220) extending to different heights.

2. The turbine blade(1000) of claim 1, wherein the height of the first squealer tip (1210) extending from the tip region (1150) of the blade body (1100) is greater than the height of the second squealer tip (1220) extending from the tip region (1150) of the blade body (1100).

3. The turbine blade (1000) of claim 2, wherein the squealer tip (1200) further comprises a third squealer tip (1230) provided between the first squealer tip (1210) and the second squealer tip (1220) on the tip region (1150) of the blade body (1100), extending upward, and sloping toward the second squealer tip (1220),
the height of the third squealer tip (1230) extending from the tip region (1150) of the blade body(1100) is equal to the height of the first squealer tip (1210) extending from the tip region (1150) of the blade body (1100).

4. The turbine blade (1000) of claim 3, wherein the angle of the third squealer tip (1230) sloping toward the second squealer tip (1220) from the tip region (1150) of the blade body (1100) is between 30° and 90°.

5. The turbine blade (1000) of claim 3, wherein the thickness of each of the first squealer tip (1210), the second squealer tip (1220), and the third squealer tip (1230) is between 1 mm and 3 mm.

6. The turbine blade (1000) of claim 3, wherein the separation width between one surface of a bottom of the third squealer tip (1230) adjacent to the second squealer tip (1220) and one surface of the adjacent second squealer tip (1220) is between 1 mm and 5 mm.

7. The turbine blade (1000) of claim 3, wherein the ratio of the height of the second squealer tip (1220) extending from the tip region (1150) of the blade body (1100) relative to the thickness of the tip region (1150) of the blade body (1100) is between 0.01 and 0.05.

8. The turbine blade (1000) of claim 7, wherein the ratio of the height of the first squealer tip (1210) extending from the tip region (1150) of the blade body (1100) relative to the thickness of the tip region (1150) of the blade body (1100) is between 0.01 and 0.1.

9. A gas turbine (100) comprising:
a compressor (110) configured to compress air introduced from an external source;
a plurality of turbine blades (1000) configured to be rotated by combustion gas generated by the combustor (120) to generate power,
wherein each of the turbine blades (1000) comprises:
a blade body (1100) comprising a leading edge (1110), a trailing edge (1120) spaced apart from the leading edge (1110), a suction sidewall (1130) having an outwardly convex shape and connecting one end of the leading edge (1110) to one end of the trailing edge (1120), a pressure sidewall (1140) having an inwardly concave shape and connecting one end of the leading edge (1110) to one end of the trailing edge (1120), and a tip region (1150) on a top surface; and
a squealer tip (1200) extending upward from a tip region (1150) of the blade body (1100),
wherein the squealer tip (1200) comprises a first squealer tip (1210) extending upward from the suction sidewall (1130) and a second squealer tip (1220) extending upward from the pressure sidewall (1140),
the first squealer tip (1210) and the second squealer tip (1220) extending to different heights.

10. The gas turbine (100) of claim 9, wherein the height of the first squealer tip (1210) extending from the tip region (1150) of the blade body (1100) is greater than the height of the second squealer tip (1220) extending from the tip region (1150) of the blade body (1100).

11. The gas turbine (100) of claim 10, wherein the squealer tip (1200) further comprises a third squealer tip(1230) provided between the first squealer tip (1210) and the second squealer tip (1220) on the tip region (1150) of the blade body (1100), extending upward, and sloping toward the second squealer tip (1220),
the height of the third squealer tip (1230) extending from the tip region (1150) of the blade body (1100) is equal to the height of the first squealer tip (1210) extending from the tip region (1150) of the blade body (1100).

12. The gas turbine (100) of claim 11, wherein the angle of the third squealer tip (1230) sloping toward the second squealer tip (1220) from the tip region (1150) of the blade body (1100) is between 30° and 90°.

13. The gas turbine (100) of claim 11, wherein the thickness of each of the first squealer tip (1210), the second squealer tip (1220), and the third squealer tip (1230) is between 1 mm and 3 mm.

14. The gas turbine (100) of claim 11, wherein the separation width between one surface of a bottom of the third squealer tip (1230) adjacent to the second squealer tip (1220) and one surface of the adjacent second squealer tip (1220) is between 1 mm and 5 mm.

15. The gas turbine (100) of claim 11, wherein the ratio of the height of the second squealer tip (1220) extending from the tip region (1150) of the blade body (1100) relative to the thickness of the tip region (1150) of the blade body (1100) is between 0.01 and 0.05, and
the ratio of the height of the first squealer tip (1210) extending from the tip region (1150) of the blade body (1100) relative to the thickness of the tip region (1150) of the blade body (1100) is between 0.01 and 0.1.
